(19) Europäisches Patentamt
European Patent Office
Office européen des brevets

(11) EP 0 890 096 B1

(12) **EUROPÄISCHE PATENTSCHRIFT**

(45) Veröffentlichungstag und Bekanntmachung des Hinweises auf die Patenterteilung:
**24.07.2002 Patentblatt 2002/30**

(21) Anmeldenummer: **97920558.0**

(22) Anmeldetag: **27.03.1997**

(51) Int Cl.$^7$: **G01N 27/26**

(86) Internationale Anmeldenummer:
**PCT/DE97/00645**

(87) Internationale Veröffentlichungsnummer:
**WO 97/37215 (09.10.1997 Gazette 1997/43)**

(54) **KATIONSELEKTIVER SENSOR**

CATION-SELECTIVE SENSOR

DETECTEUR CATIONIQUE

(84) Benannte Vertragsstaaten:
**DE ES FR GB NL**

(30) Priorität: **29.03.1996 DE 19612680**

(43) Veröffentlichungstag der Anmeldung:
**13.01.1999 Patentblatt 1999/02**

(73) Patentinhaber: **INSTITUT FUR CHEMO- UND BIOSENSORIK Münster E.V.**
**48149 Münster (DE)**

(72) Erfinder:
- **AHLERS, Benedikt**
  **D-48167 Münster (DE)**
- **CHOULGA, Alexandre**
  **D-48167 Münster (DE)**
- **CAMMANN, Karl**
  **D-48155 Münster (DE)**

(74) Vertreter: **Pfenning, Meinig & Partner**
**Mozartstrasse 17**
**80336 München (DE)**

(56) Entgegenhaltungen:
**WO-A-93/06237** **CH-A- 677 295**

- **SENSORS AND ACTUATORS B, Bd. B28, Nr. 2, 1995, LAUSANNE CH, Seiten 95-102, XP000539270 N. F. SHEPPARD: "MICROFABRICATED CONDUCTIMETRIC PH SENSOR"**
- **JOURNAL OF ELECTROANALYTICAL CHEMISTRY, Bd. 395, Nr. 1-2, 1995, Seiten 305-308, XP002037881 A.A. SHUL'GA: "ION-SELECTIVE CONDUCTOMETRIC MICROSENSORS BASED ON THE PHENOMENON OF SPECIFIC SALT EXTRACTION"**
- **PATENT ABSTRACTS OF JAPAN vol. 11, no. 43 (C-402), 7.Februar 1987 & JP 61 207443 A (AGENCY OF IND. SCIENCE & TECHNOL.), 13.September 1986,**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die Erfindung betrifft einen kationselektiven Sensor, der eine kationselektive Beschichtung aufweist. Durch mit dieser Schicht in Kontakt tretende, nachzuweisende Kationen wird eine detektierbare Änderung der elektrischen Eigenschaften der Schicht hervorgerufen.

Zur Bestimmung von Ionen in Lösungen wird vielfach die potentiometrische ionenselektive Elektrode verwendet (Cammann, K., Die Arbeit mit Ionenselektiven Elektroden, 2. Aufl., Springer Verlag: Berlin, Heidelberg, New York, 1977). Ionenselektive Elektroden sind elektrochemische Sensoren, mit denen die Konzentration bzw. die Aktivität bestimmter Ionen mittels einer Potentialdifferenz bestimmt werden kann. Die ionenselektive Potentialdifferenz tritt an der Phasengrenze aktives Elektrodenmaterial/Elektrolyt auf und hängt gemäß der Nernst-Gleichung von der Aktivität eines bestimmten Ions in der Lösung ab. Ein Beispiel für derartige Sensoren sind ionenselektive Feldeffekttransistoren (z. B. DE 29344005 C2).

Anders als bei Widerstand und Kapazität haben die Absolutwerte des elektrischen Potentials keine physikalische Bedeutung, da das Potential nur in Bezug auf einen Referenzwert definiert werden kann. In der Elektrochemie wird solch ein Referenzwert gewöhnlich vom Potential der Referenzelektrode geliefert. Die Notwendigkeit einer Referenzelektrode ist der entscheidende Nachteil bei dem Einsatz potentiometrischer Messungen zur Bestimmung von Ionenaktivitäten in Lösung.

Eine andere grundlegende Einschränkung bei den potentiometrischen Analysemethoden betrifft die Zusammensetzung der ionenselektiven Membran. Die Anforderungen an die Natur der spezifischen Bindung und/oder der komplexierenden Stellen innerhalb der Membran sind so zu stellen, daß die Potentialdifferenz an der Grenzfläche Membran/Lösung selektiv in Abhängigkeit von der Anwesenheit einer bestimmten Spezies in der Lösung aufgebaut wird. Zum Beispiel sollte diese Bindung nicht zu stark sein, so daß eine genügend schneller Austausch der detektierten Spezies zwischen der Membranphase und der Lösung möglich ist.

Neben den potentiometrischen sind die am häufigsten verwendeten elektrochemischen Analyseverfahren diejenigen, die den Stromfluß durch eine passend angefertigte oder modifizierte leitende oder halbleitende Arbeitselektrode messen. Das Potential dieser Elektrode wird durch das der Referenzelektrode festgelegt. Der gemessene Stromfluß resultiert aus der elektrochemischen Redoxreaktion, die an der Grenzfläche Arbeitselektrode/Lösung abläuft. Zusätzlich zu der erforderlichen Referenzelektrode wird der Einsatz dieser Meßverfahren noch dadurch eingeschränkt, daß die gemessene Spezies bei dem an der Arbeitselektrode angelegten Arbeitspotential elektroaktiv sein muß. Außerdem muß dieses Potential von dem der störenden Spezies verschieden sein. Das letztere stellt häufig ein Problem dar, da viele chemische oder große Gruppen chemischer Verbindungen sehr ähnliche Redoxeigenschaften aufweisen. Zum anderen liegen die erforderlichen Elektrodenpotentiale für viele Verbindungen außerhalb des praktisch anwendbaren Bereichs.

Zu den zur spezifischen Erkennung von geladenen und neutralen Spezies meist verwendeten nicht-elekrochemischen Verfahren gehören die verschiedenen Arten der Flüssigchromatographie. In diesem Fall wird die zu analysierende Probe in Kontakt gebracht mit einer sogenannten stationären Phase, zum Beispiel einer Polymerschicht, die die detektierte Spezies spezifisch bindet oder zurückhält. Die Stärke dieser Bindung bestimmt die Retentionszeit des Analyten innerhalb der chromatographischen Säule. Unter Verwendung maßgeschneiderter stationärer Phasen können sehr viele Spezies identifiziert werden. Allerdings ist dieser Typ der analytischen Meßanordnung sehr komplex und teuer.

Eine weiter Möglichkeit zur Bestimmung von Ionen in Lösungen bilden ionenselektive Optoden. Ionenselektive Verbindungen und Indikatoren, welche Strukturelemente enthalten, die ihre optischen Eigenschaften in UV/VIS- Bereich ändern, können als Chromoionophore und Fluoroionophore in entsprechenden ionenselektiven Sensoren mit einer optischen Signalübertragung eingesetzt werden. Eine Übersicht über die Funktionsweise von ionenselektiven Optoden ist in folgenden Artikeln wiedergegeben K. Seiler, Ionenselektive Optodenmembranen, Fluka Chemie AG, Buchs, Schweiz (1991), ISBN 3-905617-05-6, W. Morf, K. Seiler, P.P. Sörensen, W. Simon, Ion-Selective-Electrodes, Vol.5, Pergammon Press, Oxford, New York, Akademiai Budapest (1989), S. 141).

Eine Wechselwirkung von Ionen mit den chromophoren oder fluoreszierenden Komponenten in einer Membran, welche auf einem optischen Transduktionssystem aufgebracht ist, führt zu einer Absorption oder Anregung der Fluoreszenz und es konnten auf diese Weise chemische Sensoren für farblose bzw. nichtfluoreszierende Substanzen entwickelt werden.

Die optischen Sensorsysteme weisen grundsätzliche Nachteile auf. So werden die optischen Systeme durch Umgebungslicht gestört und haben im Vergleich zu elektrochemischen Sensoren relativ enge dynamische Meßbereiche. Desweiteren ist die Langzeitstabilität von immobilisierten Komponenten durch photolytischen Abbau und Auswaschen begrenzt und die Ansprechzeiten von optischen Sensoren sind relativ lang. Weitere Nachteile von ionenselektiven Optoden ist die mangelnde Kompatibilität mit der Mikroelektronik und die fehlende Möglichkeit zur Integration.

Die Synthese von chromophoren oder fluoreszierenden Verbindungen ist sehr zeitaufwendig und kostenintensiv, welches ebenfalls sehr nachteilig ist.

Eine weitere Möglichkeit zur Bestimmung von Ionen in Lösungen sind Teststäbchen und Testpapiere. Hierbei handelt es sich um eine mikrochemische Untersuchungsmethode, bei welcher mit dem Auge erkennbare chemische Umsetzungen geringer Mengen von Elementen (in Form ihrer Ionen) oder Verbindungen erkannt werden können. Die Analyten werden aufgrund von Farbreaktionen (Farbänderungen) erkennbar. Hierbei sind alle für die spezielle Nachweisreaktion erforderlichen Reagenzien auf einem Träger aufgebracht und bei einer Exposition mit einer wäßrigen Analytlösung kann entsprechend der Intensität oder dem Farbton der jeweiligen Färbung eine Zuordnung zu einem Konzentrationsbereich des jeweiligen Analyten vorgenommen werden. Die in Testpapieren und Teststäbchen eingesetzten Reagenzien für die spezifischen Farbreaktionen oder Farbänderungen werden auch in kolorimetrischen Testsystemen eingesetzt. In der Kolometrie wird die Farbintensität einer Probenlösung visuell mit der Intensität von Standardlösungen bekannter Konzentrationen verglichen. Problematisch und nachteilhaft ist die Genauigkeit bei diesen Bestimmungsmethoden, welche oft nur halbquantitative Aussagen liefern. Der Einsatz von Teststreifen in one-line-Meßsystemen ist nicht möglich, so daß Teststreifen nicht als Sensor fungieren können. In der EP O 153641 A2 wird der Aufbau und das Meßverfahren von einigen Teststreifen dargestellt.

Eine andere wichtige Klasse der analytischen Verfahren zur Detektion von geladenen und ungeladenen Spezies in gasförmigem oder flüssigem Medium macht Gebrauch von der Messung des Widerstandes oder der Kapazität. Variationen der Leitfähigkeit oder der dielektrischen Eigenschaften einer Schicht eines sensitiven Materials werden in Abhängigkeit von den Wechselwirkungen mit der detektierten Spezies angezeigt. So finden im Bereich der Detektion von Gasen Widerstands- und kapazitive Sensoren eine breite Verwendung.

Im Gegensatz dazu trifft man nur gelegentlich auf die Anwendung solcher Sensoren bei chemischen Analysen in Flüssigkeiten. Die Messungen der totalen Leitfähigkeit von Elektrolytlösungen sind nur von begrenzter analytischer Bedeutung, weil es ihnen im allgemeinen an Spezifität mangelt. Dennoch beschreibt R. S. Sethi et al. in der GB 2204408 A einen konduktometrischen Enzym-Biosensor, der interdigitale fingerähnliche Elektroden (IDE) besitzt, welche durch eine Membran aus immobilisierter Urease abgedeckt werden. In Anwesenheit von Harnstoff in der Testlösung erlaubt die Verwendung von dicht angeordneten Elektroden die Messung der Leitfähigkeit der Lösung, mit der die Enzymschicht abgesättigt ist, sofern sich die Leitfähigkeit spezifisch zur Hydrolyse des Harnstoffs verändert, die durch die Urease katalysiert wird. Zu den Schwächen solcher Biosensoren gehört die drastische Abnahme der Empfindlichkeit des Biosensors mit zunehmender Pufferkapazität und/oder lonenstärke (Leitfähigkeit) der Lösung.

Die WO 93/06237 beschreibt die Verwendung von IDEs zur Messung der Leitfähigkeitsänderung einer Schicht elektroaktiv leitenden Polymers (Polyanilin, Polypyrrol). Diese Änderungen resultieren aus der Wechselwirkung der funktionellen Redoxgruppen des Polymers mit den in der Lösung anwesenden interessierenden Spezies oder mit Spezies, die aus einer Enzymreaktion in der Schicht des immobilisierten Enzyms resultieren, welche von oben auf die Schicht des besagten Polymers aufgebracht wird.

In der US 4,334,880 ist ein analytspezifischer Widerstandsmesser beschrieben, wobei eine elektrisch leitende- oder halbleitende Schicht aus Polyacetylen als analytspezifische Schicht dient. L. S. Raymond et al. beschreibt in der GB 21 37 361 eine Anordnung zur kapazitiven Detektion, die folgende Bestandteile enthält:

1. einen Kondensator bestehend aus zwei IDE;
2. eine erste Schicht aus elektrisch isolierendem Material, die die elektrisch leitende Elektrode abdeckt und gegenüber der zu analysierenden Lösung abschirmt;
3. eine zweite Schicht eines Materials, die die erste Schicht abdeckt, wobei die zweite Schicht für eine spezifische nicht-wäßrige Substanz in einer Lösung durchlässig ist, welche durch ihr Eintreten in das elektrische Feld zwischen den IDEs eine Änderung der Kapazität des Kondensators bewirkt.

Die zweite Schicht enthält zum Beispiel das selektiv für Kaliumionen durchlässige Valinomycin. Die Interdigitalelektroden messen die Änderungen der Kapazität als Folge der spezifischen Aufnahme von Ionen in die Valinomycinschicht.

Die GB 21 37 361 liefert keine Beschreibung der Membranzusammensetzung, d.h. es fehlen Angaben zu den Bedingungen, die notwendig sind, um die erforderliche Durchlässigkeit der sensitiven zweiten Schicht in Bezug auf die interessierenden Spezies sicherzustellen. Andererseits schränken solche Bedingungen in großem Umfang die Anzahl der detektierbaren Spezies ein. Die Notwendigkeit der Abschirmung der leitenden Elektroden durch eine isolierende Schicht erschwert die Herstellung des Transducers wegen der hohen Ansprüche an die Qualität solch einer Schicht und verschlechtert gleichzeitig die Sensorempfindlichkeit. Ein weiteres Problem ist eine nicht auszuschließende sprunghafte Änderung der Dielektrizitätskonstanten der Meßschicht in Abhängigkeit von der Zusammensetzung der zu analysierenden Lösung.

In "Journal of Electrical Analytical Chemistry" Bd. 395, Nr. 1-2, 1995, 305-308 wird ein impedimetrischer Kationenselektiver Sensor, bestehend aus zwei Elektronen, beschrieben, die mit einer ionisch leitenden, kationenspezifischen Schicht aus einem Polymermaterial in Verbindung stehen. Die kationenselektive Schicht enthält Kopplungselemente, welche Kationen selektiv aus der Lösung entfernen kann, so dass sich durch Kationenaufnahme die elektrischen Eigenschaften wie Widerstand, hohe Leitfähigkeit, Abmitanz oder Impedanz der Schicht ändern.

In der "Sensors and Actuators" Bd. 28, Nr. 2, 1995, 95-102 wird ein Leitfähigkeits-ph-Sensor beschrieben, dessen sensitive Schicht aus einem Hydrogel besteht, welches eine ph-abhängige Hydratation aufweist.

Ausgehend von den geschilderten Nachteilen des Standes der Technik ist es die Aufgabe der vorliegenden Erfindung, ein neuartiges Sensorkonzept und entsprechende Sensoren vorzuschlagen, die es erlauben, in Lösung enthaltene Kationen quantitativ und/oder qualitativ über eine Absolutmessung, ohne Verwendung von Referenzelektroden, zu bestimmen und zugleich störende Interferenzen von Anionen zu beseitigen, um dadurch die Meßgenauigkeit zu steigern und die Detektionsgrenze zu senken.

Die Lösung dieser Aufgabe erfolgt durch die kennzeichnenden Merkmale des Anspruches 1. Die Unteransprüche zeigen vorteilhafte Weiterbildungen auf.

Erfindungsgemäß wird vorgeschlagen, einen impedimetrischen kationenselektiven Sensor zu verwenden, der aus mindestens einer mit der Lösung in Kontakt stehenden, ionisch leitenden kationenselektiven Schicht (Membran) aus einem flüssigen, halbfesten oder festen Material besteht. Diese Schicht steht mit mindestens einer von mindestens zwei Elektroden in Verbindung. Die Elektroden können auf einen Träger aufgebracht sein.

Die Komponenten der kationselektiven Schicht dürfen mit der Lösung nicht mischbar sein, damit die Schicht nicht "ausblutet". Bevorzugt wird eine wäßrige Lösung und eine lipophile, kationselektive Schicht verwendet. Dabei enthält das hydrophobe Material mindestens eine hydrophobe, mit der wäßrigen Lösung nichtmischbare Substanz, die als Matrix und/oder Lösungsmittel für weitere Schichtkomponenten dienen kann und die kationerkennende Kopplungselemente enthält.

Erfindungsgemäß wird weiterhin vorgeschlagen, daß in der Schicht funktionelle Gruppierungen und/oder Verbindungen vorhanden sind, welche als Säure/Base in protonierbarer Form fungieren können. Sie können in der Schicht z.B. in Form eines pH-Indikators oder einer lipophilen Säure oder Base vertreten sein. Durch die Wahl der Meßbedingungen liegt die Säure/Base-Komponente protoniert in der Membran vor.

Die vorgeschlagene neuartige Schichtzusammensetzung ermöglicht eine vollkommen neue Funktionsweise der impedimetrischen kationenselektiven Sensoren. Bei einem Kontakt der erfindungsgemäßen Sensoren mit der zu analysierenden Lösung erfolgt Ionenaustausch zwischen der kationselektiven Schicht und der Lösung. Die in der Lösung enthaltenen, zu detektierenden Kationen treten in die kationselektive Schicht ein und bilden Komplexe mit den in der Schicht anwesenden, selektiven Kopplungselementen. Gleichzeitig treten zur Erhaltung der Ladungsneutralität der Schicht Protonen, welche an saure bzw. basische funktionelle Gruppierungen in der Schicht gebundenen sind, aus der kationselektiven Schicht in die Lösung aus. Aufgrund der erfindungsgemäßen Säure/Base-Komponente in der kationselektiven Schicht braucht also eine zusätzliche Aufnahme von Anionen aus der Lösung (Anion-Koextraktion) zur erforderlichen Ladungskompensation nicht zu erfolgen.

Dies ist von Vorteil, da nie genau bekannt ist, welche Anionen im einzelnen und in welchen Mengen zur Kompensation der Ladung der Kationen aus der Lösung in die selektive Schicht eintreten und die Sensoreigenschaften damit beeinflussen würden. Besonders gravierend ist dieses Problem bei der Analyse biologischer Proben und physiologischer Flüssigkeiten, bei welchen die Anwesenheit einer Vielzahl verschiedener, sehr lipophiler Anionen seit langem bekannt ist. Durch Vermeidung störender Anioninterferenzen gewährleistet die in der kationsensitiven Schicht vorhandene Säure/Base-Komponente also gleichzeitig eine hohe Meßgenauigkeit und eine niedrige Detektionsgrenze des Sensors.

Aufgrund der beschriebenen ionischen Prozesse ändern sich die bulkelektrischen Eigenschaften der Schicht, was mit der Hilfe der mit der Schicht in Kontakt stehenden Elektroden nachgewiesen werden kann. Hierbei ist es nicht entscheidend, ob eine reversible oder irreversible Kationenaufnahme in die kationenselektive Schicht stattfindet, da die Messungen der Schichteigenschaften, wie beispielsweise des Widerstandes oder der Leitfähigkeit, absolute Messungen sind. Bei irreversiblen Kationenextraktionen bzw. Bindungen kann der erfindungsgemäße Sensor als Dosimeter verwendet werden, d.h. die Änderung der elektrischen Eigenschaften der Membran ist als Summenparameter ("Dosis") der Analytspuren in einem Medium aufzufassen, dem die Meßanordnung über einen längeren Zeitraum ausgesetzt ist.

Die erfindungsgemäßen kationenselektiven Sensoren weisen gegenüber dem Stand der Technik folgende Vorteile auf:

1. Bei den erfindungemäßen Sensoren wird keine Referenzelektrode benötigt, da die Messungen von elektrischen Eigenschaften wie der Leitfähigkeit oder Admittanz, im Gegensatz zu z.B. Potentialmessungen in der Potentiometrie, absolute Messungen sind.
2. Der neuartige Funktionsmechanismus des Sensors beseitigt den störenden Einfluß von Anionen in der Probelösung auf das Sensoransprechverhalten.
3. Die Anwendung des Ionenaustausches als neuartiger Funktionsmechanismus des Sensors verbessert das Ansprechverhalten des Sensors (Reversibilität, Selektivität, Stabilität).
4. Eine breite Palette von neuen Materialien kann für die Sensoroptimierung und Sensorproduktion eingesetzt werden.

5. Der neuartige Funktionsmechanismus des Sensors unterdrückt stark den Einfluß der Probematrix auf die Meßergebnisse und erleichtert wesentlich die Probevorbereitung.
6. Diese Sensoren erlauben im Gegensatz zu potentiometrischen Sensoren die Bestimmung von Analytkonzentrationen in Lösungen mit sehr hoher Ionenstärke.
7. Mit den Sensoren ist eine Messung der Lösungszusammensetzung in verschlossenen Gefäßen, z.B. in zugeschmolzenen Glasampullen, unter Verwendung von kontaktlosen Meßtechniken möglich.
8. Die Sensoren können als hochintegrierte Festkörperkomplettsysteme konstruiert werden. Dies erlaubt eine starke Miniaturisierung und gewährleistet die Kompatibilität zur Mikroelektronik.

Die für die Herstellung der festen oder halbfesten bzw. porösen Meßelektroden verwendeten leitfähigen Materialien sind Stoffe, die aufgrund der Beweglichkeit von Elektronen bzw. von Defektstellen Eigenschaften eines elektrischen Leiters, eines Halbleiters oder eines Defektstellenleiters aufweisen. Beispiele hierfür sind:

- edle Metalle (Ag, Au, Pt, Pd,...);
- andere ausreichend chemisch stabile Metalle (Ni, Ta, Ti, Cr, Cu, V, Al,...);
- leitfähige Pasten und Metall- oder Graphitpartikel enthaltende Epoxidharze;
- Materialien auf Kohlenstoffbasis (Kohlefasern, Glaskohlenstoff, Graphit) ;
- hochdotiertes Silizium (Poly-Si);
- leitfähige Polymere (Polypyrrol, Polyanilin, Polyacetylen,...);
- leitende Polymere, die Metall- oder Graphitpartikel enthalten.

Die Leiter können freistehend sein, beispielsweise in der Form von Stäben, Drähten oder Maschen, oder in Plastik oder andere isolierende Träger derart eingebettet sein, daß nur die Membrankontaktfläche freigelassen wird. Dieser exponierte Teil kann zum Beispiel in Form von Scheiben oder Bändern vorliegen.

Alternativ dazu können die Leiter auch auf einem isolierenden Träger in Form von dicken oder dünnen Schichten gebildet werden (die Ausdrücke beziehen sich auf den etablierten Gebrauch der Ausdrücke Dickschicht- und Dünnschichttechnologie im Bereich der Mikroelektronik). Die Herstellung kann beispielsweise mit Hilfe von Siebdruck, durch chemische oder elektrochemische Polymerisation oder -abscheidung (das letztere im Fall von Metallen), durch Vakuumaufdampfung, Sputtern oder andere Techniken der Dick- und Dünnschichttechnologien erfolgen. Die auf einen isolierenden Träger aufgebrachten Leiter können zum Beispiel in der Form von Bändern, Kreisen, Scheiben oder Interdigitalelektroden vorliegen. Die Leiter können auf den selben oder auf entgegengesetzten Seiten des Trägers angeordnet sein, in einer Ebene oder vertikal voneinander getrennt.

Die Oberfläche der Meßelektrode muß nicht notwendigerweise glatt oder poliert sein. Sie kann aufgerauht sein, um einen besseren Kontakt zur kationselektiven Schicht herzustellen und um den Grenzflächenwiderstand zu senken.

Weiterhin kann für den Fall, daß erhöhte elektrochemische Grenzwiderstände zwischen den Leitern und der Schicht auftreten, eine zusätzliche Schicht zwischen den Leitern und der analytselektiven Schicht zur Unterdrückung des Grenzflächenwiderstandes redoxpaarbildende Substanzen angeordnet werden. Derartige, den Grenzflächenwiderstand unterdrückende, redoxpaarbildende Substanzen sind der CH 677 295 beschrieben. Auf den Offenbarungsgehalt wird deshalb ausdrücklich Bezug genommen. Die Schichtdicke der Schicht liegt typischerweise im Bereich von 0,01 µm bis 100 µm.

Da kein Elektronentransfer zwischen den Elektroden und der analytspezifischen Schicht während der AC-Messungen notwendig ist, ist ein direkter Kontakt, zwischen der Oberfläche des Leiters und der Schicht nicht erforderlich. Somit ist es möglich, solche Messungen mit Elektroden, welche durch einen Luftspalt oder eine isolierende Schicht von der analytselektiven Schicht getrennt werden, durch eine kapazitive Kopplung durchzuführen. Ebenso ist es möglich, die induktive Kopplung für kontaktlose Messungen der elektrischen Eigenschaften von Schichten zu nutzen. In diesem Fall wird die Schicht in einer Spule plaziert, durch die dann ein Strom fließt. Wirbelströme werden in der Schicht aufgebaut und bewirken einen Leistungsverlust in Abhängigkeit von der Schichtleitfähigkeit. Eine weitere Möglichkeit besteht in der Verwendung von zwei Spulen, welche durch einen Kreisstrom in der Probe verbunden werden.

Weitere geeignete Elektrodenanordnungen und diesbezügliche Modifikationen sind in der DE 44 37 274.4-52 ausgeführt.

Die erfindungsgemäße kationenspezifische Schicht, welche kationselektive Kopplungselemente und Komponenten mit Säure/Base-Eigenschaften enthält, kann verschiedene Zusammensetzungen und Konsistenzen aufweisen. Erfindungsgemäß kann das Schichtmaterial beispielsweise aus organischen Flüssigkeiten, Polymeren oder Ionentauschern sowie aus Kombinationen dieser Komponenten bestehen.

Zunächst sollen als Beschichtungsmaterial in Frage kommende Flüssigkeiten betrachtet werden, wobei auch entsprechende Mischungen denkbar sind. Als Beispiel seien folgende Flüssigkeiten genannt: nicht polare Lösungsmittel wie Tetrachlormethan, Chloroform, Hexan, Toluol und die meisten aromatischen und ungesättigten Kohlenwasserstoffe.

Die kationselektive Schicht kann einen oder mehrere Weichmacher enthalten. Weichmacher sind flüssige oder feste, indifferente organische Substanzen mit geringem Dampfdruck, überwiegend solche esterartiger Natur. Sie können ohne chemische Reaktion, vorwiegend durch ihr Löse- und/oder Quellvermögen, unter Umständen aber auch ohne ein solches, mit hochpolymeren Stoffen in chemisch-physikalische Wechselwirkungen treten und ein homogenes System mit diesen bilden [DIN 55945 (Dez. 1988)]. Bevorzugt werden Weichmacher, welche lipophile Eigenschaften aufweisen, verwendet.

Es können unterschiedlichste Weichmacher verwendet werden, wie z.B. Phtalsäureester, Trimellitsäureester, aliphatische Dicarbonsäureester, Sebacate, Polyester aus Adipin-, Sebacin-, Azelain- und Phtalsäure mit Diolen wie 1,3-Butandiol, 1,2-Propandiol, 1,4-Butandiol u.a., Phosphate, Fettsäureester, Hydroxycarbonsäureester, epoxidierte Fettsäurederivate insbesondere Triglyceride und Monoester, Polyamidweichmacher z.B. Benzolsulfonamide oder p-Toluolsulfonamide oder langkettige aliphatische Alkohole.

Auch können Gemische aus zwei oder mehreren Weichmachern zur Plastifizierung der Rezeptorschichten zugesetzt werden.

Die Verwendung deratiger Weichmacher in ionenselektiven Membranen ist in der Literatur beschrieben. Folgende, lipophile Eigenschaften aufweisende Weichmacher, seien exemplarisch genannt: Ether, z.B. o-Nitrophenyloctylether, Ester/Amid-Weichmacher, hierbei besonders Dicarbonsäure-diesterweichmacher, Tetracarbonsäure-tetraesterweichmacher, wobei die veresternde Komponente ein aliphatischer Alkohol, im allgemeinen mit mindestens fünf Kohlenstoffatomen, z.B. Bis (2-ethylhexyl) sebacat, Diester der Phosphorsäure oder Phosphonsäure.

Viele Weichmacher sind Sauerstoffdonatoren mit weiteren funktionellen Gruppen, wie z.B.: Bis(2-ethylhexyl sebacat, Dioctylphathalat, Dibenzylether, Tris-2-ethylhexyl-phosphate, etc.

Erfindungsgemäß kommen als Bestandteile der kationspezifischen Schicht auch ein oder mehrere, bevorzugt mit wäßrigen Lösungen nicht oder nur gering mischbare Polymere in Betracht.

So wären Polymerisate zu nennen, welche die Polymermatrix auf dem Transducer, d.h. auf den Elektroden und dem optionalen Träger, bilden. Bevorzugt sind Homopolymerisate oder Copolymerisate, welche aus den Monomereinheiten von Alkenen stammen und gegebenenfalls unpolare oder wenig polare Substituenten tragen:

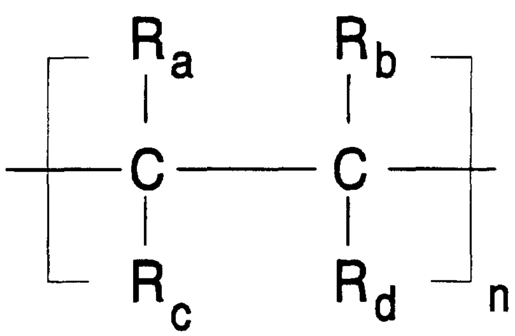

Als Beispiele für die Substituenten $R_i$ seien genannt: $R_i$ = -H, -F, -Cl, -Br, $-NO_2$, -COR, -SH, -CN, -COOR (über das Sauerstoffatom oder Kohlenstoffatom an die Polymerhauptkette angebunden), Carbonsäurenitrilgruppen, Carbonsäureamidgruppen, aliphatische/aromatische Ethergruppierungen, aromatische/heteroaromatische Reste. Das Polymermaterial kann von niedermolekularer bis sehr hochmolekularer Zusammensetzung sein, vorzugsweise jedoch hochmolekular.

Von den genannten Homopolymerisaten bzw. Copolymerisaten auf der Basis von Monomereinheiten, die von Alkenen stammen, sind speziell diejenigen bevorzugt, welche ein Vinylhalogenid- oder Vinylidenhalogenidhomo- oder copolymerisat sind. In diesen Homo- bzw. Copolypolymerisaten ist das Halogenatom bevorzugt ein Chloratom.

Des weiteren kommen als Polymermatrix der festen oder halbfesten Membran auch weitere folgende Polymermaterialien (und entsprechende Homo-, Copolymerisate oder Derivate) in Betracht: Polyvinyle, wie Polyvinylchlorid, Polyvinylstearat oder Polyvinylacetat Polymetacrylsäureester, Cellulosederivate wie Celluloseester und Celluloseether, Polyethylenoxide, Polyamide, Polyimide, Polyester, Polyether, Polyphenole, Polystyrole, Polyurethane, Polycarbonate, Polypyrrole, Polyaniline, Polyacethylene, Polysiloxane, Siliciumhaltige Polymere wie Silikone, halogenierte Silikone oder Silane, Polyacroleine, Polyacryle, Polyacrylnitrile, Polyethylenen, halogenierte Polymere, Polyene, Polyethylenglycole, Polyglycole, Polyharnstoffe, Polyisocyanate, Polyisocyanide, Polyisoprene, Polyketone, Polymaleinsäure(derivate), Polysaccharide, Polyole, Polypeptide, Polyphenylen, Polypropylene, Lignin oder Chitin.

Ebenso können modifizierte, copolymerisierte Polymere oder Polymergemische aus zwei oder mehreren Polymeren oder copolymerisierten Polymeren als Bestandteil der kationenselektiven Schicht eingesetzt werden.

Erfindungsgemäß kann das hydrophobe Material aus einer Kombination von Polymeren und Weichmachern bestehen.

Aus Polymeren hergestellte Schichten können organische, lipophile, wasserunlösliche Flüssigkeiten, vorzugsweise Ether und Ester aliphatischer Alkohole, enthalten. Die Selektivität der hydrophoben Schicht kann modifiziert werden durch Änderungen in der Schichtzusammensetzung und Beschaffenheit der einzelnen Komponenten.

Die kationselektive Schicht kann auch eine poröse Matrix/Träger (z.B. Filterpapiere, Gewebe, mikroporöses Glas, keramik) zur Stabilisierung der anderen Komponenten beinhalten. Die Verwendung einer porösen Matrix/Trägers bewirkt dazu noch die Homogenisierung der einzelnen Komponenten.

Ein wesentlicher Bestandteil der kationselektiven Schicht sind die kationselektiven Kopplungselemente. Im Sinn der Erfindung umfaßt der Begriff Kopplungselemente alle Verbindungen bzw. Reste und funktionelle Gruppierungen, die in der Lage sind, die in der zu untersuchenden Lösung enthaltenen Kationen zu binden oder komplexieren.

Die kationspezifische Schicht kann einerseits aus Flüssigkeiten und/oder Polymeren bestehen, die selbst entsprechende Kopplungselemente zur selektiven Extraktion von Kationen aufweisen. Andererseits ist es aber auch möglich, daß die Schicht, wie vorstehend beschrieben, Polymermaterialien und/oder organische Flüssigkeiten enthält und daß zusätzlich kationselektive Kopplungselemente zugegeben werden.

Die kationselektiven Kopplungselemente sind in der Lage, selektiv mit Kationen aus einer wäßrigen Probelösung, welche in Kontakt mit der kationselektiven Schicht steht, Komplexe zu bilden und damit spezifisch Kationen aus der Lösung in die Schicht aufzunehmen.

Unter kationenselektiven Kopplungselementen werden gemäß der vorliegenden Erfindung u.a. funktionelle Gruppen, Ionenaustauscher, komplexierende Gruppen, oder Chelatgruppen, Käfigverbindungen (z.B. Podanden, Koronanden, Polyether, Cyclophane, Kronenether, Antibiotika, Cyclodextrine), natürliche und synthetische Polypeptide, Lipide und Tenside verstanden.

Die Kopplungselemente können komplexbildende Weichmacher sein oder Weichmacher, die Chelate bilden können. Sie enthalten entsprechende chelatisierende funktionelle Gruppen in kovalenter Bindung am Weichmacher. Komplexbildung dieser Gruppen mit Ionen kann sowohl intra- als auch intermolekular erfolgen. Als Beispiel seien hier Weichmacher wie cis- N,N,N- tetraisobutyl-1,2-cyclohexandicarboxamide und Dioctylphosphonat als $Li^+$-selektive Weichmacher genannt.

Die kationspezifische Schicht kann kationenselektive Kopplungsstellen aufweisende Polymeren beinhalten, welche Kationen selektiv aus der Lösung in die Schicht extrahieren können. Die kationselektive Schicht ist vorzugsweise ein Ionenleiter.

Erfindungsgemäß können die Polymere komplexbildende Polymere sein, z.B. polymere Chelatbildner. Sie enthalten entsprechende chelatisierende funktionelle Gruppen in kovalenter Bindung an Polymeren, die unvernetzt oder vernetzt sein können. Komplexbildung dieser Gruppen mit Ionen kann sowohl intra- als auch intermolekular erfolgen. Komplexbildende Gruppen (Liganden) üblicher komplexbildenden Polymere sind Iminodiessigsäure-, Hydroxychinolin-, Thioharnstoff-, Guanidin-, Dithiocarbamat-, Hydroxamsäure-, Amidoxim-, Aminophosphorsäure-, (cycl.) Polyamino-, Mercapto-, 1,3-Dicarbonyl-, Thio-, Cyano-, u. Kronenether-Reste mit z.T. sehr spezifischen Aktivitäten gegenüber Ionen unterschiedlicher Metalle.

Basispolymere der komplexbildenden Polymere sind neben Polystyrolen, Polyacrylate, Polyacrylnitrile, Polyvinylalkohole Polyethylenimine und Polysiloxane. Die Herstellung der komplexbildenden Polymere erfolgt vorzugsweise in polymeranalogen Reaktionen an vernetzten Polyvinyl-Verbindungen.

Durch polymeranaloge Reaktionen können komplexbildende Polymere sowohl aus natürlichen Polymeren wie Cellulose, Stärke, Lignin oder Chitin als auch aus modifizierten natürlichen Polymeren, z.B. Huminsäure, gewonnen werden. Ebenso können die Verbindungen kovalent an das Polymer gebunden sein, wie Käfigverbindungen (z.B. Cyclophane, Kronenether, Antibiotika, Cyclodextrine), natürliche oder synthetische Polypeptide, Lipide und Tenside. Beispiele für solche Polymere sind Polysaccharide mit aktiven Liganden, Poly-Kronenether, Polykronenvinyle, Polyethercopolymere und Polyacrylate, Polysaccharide und Polysiloxane mit aktiven Liganden.

Tenside, kolloidales Gold, Graphit, Glas oder anorganische Mikropartikel oder Perlen können, eingeschlossen in den Polymerfilmen, als molekulare Carrier dienen.

Die selektive Bindung von neutralen oder geladenen Spezies, z.B Alkalimetallionen, $Mg^{2+}$, $Ca^{2+}$ oder Übergangsmetallionen, an spezifisch funktionelle Gruppen in der Polymerschicht kann die Änderung der Morphologie und der Porengröße bewirken und zwar

(a) Zu-/Abnahme der Quervenetzung des Matrixpolymers oder

(b) Konformative, moleküle Änderung der Komponenten der Membranschicht.

Änderungen der Morphologie können zur Änderung der elektrischen Eigenschaften der Membranschicht führen, z.B. der ionischen Leitfähigkeit. Dies ist der Fall bei einigen Gelen, Proteinen, besonders Rezeptor-Proteinen,

Lipiden und Tensiden, welche funktionelle Gruppen enthalten, die fähig sind, Kationen zu binden.

Ebenso können Polymerfilme verwendet werden, die kovalent an das Polymergrundgerüst angebundene Liganden enthalten, welche Kationen zu komplexieren vermögen. Diese Filme können quervernetzt werden, z.B. durch Übergangsmetallionen, wenn diese Ionen Komplexe oder Chelate mit den im Polymer enthaltenen Liganden an verschiedenen Stellen der Polymerkette bilden.

Kationen-Rezeptor-Polymerschichten, z.B. Mehrphasenpolymerschichten, die sensitiv gegenüber $Ca^{2+}$ sind, können Poly-L-Glutaminsäureketten in einem Block-Copolymer enthalten.

Unter den Molekülen, welche fähig sind, konformative Änderungen, induziert durch Kationenbindung, vorzunehmen, seien Polyionen wie Proteine und synthetische oder natürliche Polypeptide zu nennen. Besonders die zwei Klassen der polyanionischen Makromoleküle, Proteoglycane und saure Glycoproteine, zeigen, z.B. für Natrium und Calcium, die oben genannten Charakteristika. Diese Makromoleküle stellen Polyanionen dar und zwar entsprechend ihrer carboxylierten, sialischen oder Sulfatgruppen.

Wenn die oben beschriebenen Polymerfilme dispergierte, leitende Partikel enthalten, bewirkt die Kontraktion des Films eine Zunahme der Film-Leitfähigkeit entsprechend des erhöhten Kontaktes zwischen den Partikeln. Die leitenden Partikel haben vorzugsweise eine Größe kleiner als 10 µm, idealerweise kleiner als 1 µm und bestehen z. B. aus einem Halbleiter, Metall oder Graphit.

Die analytspezifische Schicht kann eine geordnete Struktur haben (d.h. die Komponenten des Mediums bilden eine flüssige Kristallphase), eine teilweise geordnete (z.B bei den Multi-Doppelstrukturen von Filmen, die aus polyionischen Komplexen gebildet werden) oder eine amorphe. Bei der Extraktion des Analyten in die Membranphase ist eine Auswirkung auf die Konditionierung der Membranphase möglich, z.B. eine Desorganisierung, wodurch deren bulkelektrische Eigenschaften beeinflußt werden.

Die oben erwähnten Multi-Doppelstrukturen können z.B. aus polyionischen Komplexen zwischen quartären Ammoniumionen einschließlich Tensiden und Lipiden und aus Polyionen, wie z.B. Polystyrolsulphonat und Polyvinylsulphonat gebildet werden. Die Komponenten solch eines Films sind beispielsweise Dioctadegyldimethylammoniumbromid ($2C_{18}N^{+}2CBr^{-}$) und Natriumpolystyrolsulphonat ($PSS\text{-}Na^{+}$).

Die kationenspezifische Schicht kann zu den bereits angeführten Polymermaterialien und/oder Flüssigkeiten noch zusätzlich kationenselektive Kopplungselemente enthalten.

Als derartige Komplexbildner sind bevorzugt Komplexbildner für Kationen zu nennen, welche eine Komplexierung sowie eine Transfer-Beweglichkeit von Kationen in der hydrophoben kationselektiven Schicht ermöglichen.

Diese Komplexbildner können lipophile Eigenschaften aufweisen und mit Kationen geladene Komplexe bilden. Gegebenenfalls stellen Ionenaustauscher ebenfalls Komponenten in der Schicht dar, welche die Beweglichkeit von Ionen innerhalb der Schicht bewirken.

Viele Beispiele für obengenannte kationenselektive Komponenten mit lipophilen Eigenschaften sind in der Literatur beschrieben und werden in ionenselektiven Membranen in ionenselektiven Sensoren eingesetzt.

Als Beispiele für kationenselektive Komponenten seien hier zyklische Komplexbildner für Kationen z.B. Makrozyclen wie Kronenether (Alkaliselektivität), natürliche Antibiotika (Valinomycin - Kaliumselektivität, Nonactin - Ammoniumselektivität) sowie nichtzyklische, z.B. Dicarbonsäurediamide (hohe Selektivitäten gegenüber Alkali-/Erdalkaliionen), Tridodecylamin (H+-Sensitivität), Koronanden, Podanden, Polyether und Kryptanden genannt.

Ionenaustauscher und ionische Polymere können ebenfalls als sensitives Schichtmaterial im Sinne der vorliegenden Erfindung verwendet werden, sofern der Ionenaustausch gegen das detektierte Ion eine Veränderung der elektrischen Eigenschaften der Schicht zur Folge hat.

In dieser Erfindung wird die Defination eines Ionenaustauschers gemäß RÖMPP CHEMIE LEXIKON, Georg Thieme Verlag Stuttgart, 9. Auflage, 1989, Bd. 3, Seite 2026-2028 verwendet.

Das charakteristische Merkmal eines Ionenaustauschers und ionischen Polymers ist die Anwesenheit einer großen Menge an hydrophilen Gruppen, die an das Polymer gebunden sind. Diese Gruppen können in Kationenaustauschharzen z.B. $-SO_3H$ und -COOH sein. Solche Polymere, z.B. Persulfonpolymere wie Nafion oder Eastman Kodak AQ-Polymere, können auch wesentliche hydrophobe Bereiche enthalten. Dadurch werden Filme mit heterogener Struktur gebildet, mit getrennt hydrophilen und hydrophoben Regionen. Charakteristisch für diese Materialien ist die Tatsache, daß sie sich durch den Einschluß von Wasser selbst innerlich verdünnen und eine lokale Ionisation verhindern, woraus eine Leitfähigkeit nahe der von wäßrigen Elektrolyten resultiert.

Als Ionenaustauscher eigenen sich z.B. Tetraalkylammoniumsalze, kationische Metallkomplexe, Dialkylphosphate, Tetraarylborate und deren Salze, z.B. Tetraphenylborat und dessen Silber- und Alkalisalze, wie Natriumtetraphenylborat, enthalten. Die Phenylkerne der Tetraphenylborate können unsubstituiert sein oder substituiert, vorzugsweise monochlorsubstituiert in Parastellung.

Der Begriff "ionische Polymere" (Definition gemäß RÖMPP CHEMIE LEXIKON, Georg Thieme Verlag Stuttgart, 9. Auflage, 1989, Bd. 3, Seite 2038) bezieht sich nach der vorliegenden Erfindung auf Polymere, die an das oder in das Grundgerüst des Polymers angebundene basische oder saure funktionelle Gruppen besitzen. Als ionische Gruppen der ionischen Polymere können u.a. Salze von Sulfonsäure-, Phosphonsäure-, Carboxy-, Ammonium- oder Phosphoniumgruppen fungieren.

Nach der Erfindung können die die sensitive Schicht bildenden Ionomere im besonderen folgenden Gruppen angehören: Copolymere von Ethylen, Acryl- oder Metacrylsäure, Carboxielastomere, Terpolymere, Terpolymer, Ethylen-Propylen-Diensulfonat, substituierte Polyvinyle wie Polyacrylate, im besonderen Polyacetate oder Butyrale oder Polyvinylimidazole, Perfluoropolymere, im besonderen Perfluorosulfonate sowie Polyampholyte.

Neben den bisher beschriebenen Komponenten und Kopplungselementen in der kationselektiven Schicht kommen auch alle in der DE 44 37 274.4-52 beschriebenen Substanzen in Frage. Auf den gesamten Offenbarungsgehalt der DE 44 37 274.4-52 wird ausdrücklich Bezug genommen.

Nachfolgend wird auf die in der kationselektiven Schicht vorhandene, erfindungsgemäße Säure/Base-Komponente näher eingegangen. Unter dem Begriff Säure/Base-Komponente im Sinne der Erfindung werden u.a. funktionelle Gruppierungen und chemische Verbindungen verstanden, welche in Folge der Abgabe/Aufnahme von zu detektierenden Kationen in der kationselektiven Schicht als Protonendonator/akzeptor fungieren und Protonen abzugeben oder aufzunehmen vermögen. Die Säure/Base-Komponente kann aufgrund der Ankopplung an andere Komponenten der kationselektiven Schicht oder wegen ihrer eigenen hohen Lipophilie bevorzugt nicht oder nur gering mit wäßrigen Lösungen mischbar sein.

Durch die Wechselwirkung der zu detektierenden Kationen mit den in der Schicht anwesenden kationerkennenden Kopplungselementen und die daraus resultierende Protonenaufnahme oder -abgabe der Säure/Base-Komponente zur Erhaltung der Ladungsneutralität, entsteht eine meßbare Änderung der elektrischen Eigenschaften der kationenselektiven Schicht.

Die Meßbedingungen und/oder die Zusammensetzung der selektiven Schicht sind dabei so gewählt, daß die entsprechenden funktionelle Gruppierungen und chemische Verbindungen mit Säure/Base-Eigenschaften in der kationenselektiven Schicht vorzugsweise in protonierter Form vorliegen.

Die Säure/Base-Komponenten besitzen bevorzugt eine Säurekonstante $pK_s$ im Bereich von 3 bis 12. Idealerweise weist die Säure/Base-Komponente einen $pK_s$-Wert von ungefähr 6 bis 8 auf.

Erfindungsgemäß ist zu berücksichtigen, daß jede Komponente des schichtbildenden, hydrophoben Materials funktionelle Gruppierungen aufweisen kann, welche in der Schicht als Säure/Base fungieren können.

Die in der selektiven Schicht anwesenden Säure/Base-Komponenten können auch bevorzugt durch zusätzlich zugegebene lipophile Säuren oder Basen vertreten sein. Als lipophile Säure oder Base können z.B. pH-Indikatoren fungieren. Diese können chemisch entsprechend modifiziert sein können, so daß sie eine geeignete Lipophilie aufweisen. Diese Modifikation kann durch Ankopplung von Benzyl- oder anderen Resten sowie durch Ankopplung einer oder mehreren Alkan-Ketten mit einer Kettenlänge von vorzugsweise 4 bis 20 oder mehr Kohlenwasserstoffatomen erfolgen. Moleküle, welche sich als pH-Indikatoren eignen, sind in vielen Standardwerken beschrieben worden. So kommen z.B. phenolische Verbindungen wie p-Nitrophenol oder auch Verbindungen aus der Klasse der Indikatoren und ihrer Derivate, wie Verbindungen und Derivate des Fluorescein, Fluorescinester, 7-Hydroxy-Cumarin, Resorufine, Flavone, Pyren-3-ol, oder auch Komponenten wie 7-(ndecyl)-2-methyl-4-(3',5'-dichlorophen-4'-on)indonaphtol dafür in Frage (vgl. auch US 493,951 und US 493, 981).

Die Auswahl von lipophilen Säuren oder Basen ist nicht auf pH-Indikatoren beschränkt. Fast alle funktionellen Gruppierungen und Verbindungen, welche die erforderlichen Protonendonator/akzeptoreigenschaften besitzen, können, gegebenenfalls nach einer entsprechenden chemischen Modifizierung, als erfindungsgemäße Säure/Base-Komponente im Sinn der Erfindung in der kationselektiven Schicht eingesetzt werden.

Weitere Beispiele geeigneter Verbindungsklassen sind Fettsäuren, Lipide und Tenside mit schwach sauren oder basischen Eigenschaften.

Weitere Komponenten mit sauren oder basischen Eigenschaften können z.B auch 9-(Dimethylamino)-5-octadecanoylimino-5H-benzo[a]phenoxazin, 3-Hydroxy-4-(4-nitrophenolazo)phenyloctadecanoat oder entsprechende Derivate sein.

Im Sinn der Erfindung ist unter dem Begriff Säure/Base-Komponente auch eine Kombination von mehreren Komponenten (chemischen Verbindungen) zu verstehen, deren Reaktion bei der Wechselwirkung der zu detektierenden Kationen mit in der Schicht anwesenden kationerkennenden Kopplungselementen eine meßbare Änderung der elektrischen Eigenschaften der kationenselektiven Schicht bewirken.

Die kationenspezifische Schicht kann auf einen Träger, z.B. auf Silizium mit einer Passivierungsschicht aus $Si_3N_4$ oder $SiO_2$, auf Glas, Metall, Keramik, Saphir, Plastik oder Polymer, in Form von Filmen aufgebracht wird. Die Techniken des Aufbringens einer Polymermembranschicht sind dabei aus dem Stand der Technik bekannt. Als geeignete Abscheidungsverfahren wären u.a. zu nennen die Abscheidung aus der Lösung, Auftropfen, Dip-Coating, Spraying, chemische-, photochemische- oder elektrochemische Polymerisation, Spin-Coating oder Photolithographie.

Die kationselektive Schicht weist vorzugsweise folgende Verhältnisse der einzelnen Schichtkomponenten auf:

- 20-80 Gew% Polymermaterial, vorzugsweise 30-35 Gew%
- 20-80 Gew% Weichmacher, vorzugsweise 60-65 Gew%

- 1-10 Gew% Kationenselektive Kopplungselemente, vorzugsweise 1-5 Gew%
- 1-10 Gew% Komponente mit Säure/Base-Eigenschaften, vorzugsweise 1-5 Gew%

Gegebenenfalls ist in den Membranen noch eine weitere Komponente, beispielsweise ein Ionenaustauscher mit 1-10 Gew%, anwesend.

Prinzipiell alle chemische Verbindungen (Weichmacher, Polymere, Ionenaustauscher, kationenselektiver Komplexbildner, Ionophore, Chromoionophore, lipophile pH-Indikatoren und andere), welche gemäß des Standes der Technik zur Herstellung von potentiometrischen Elektroden, ionenselektiven Optoden oder Teststreifen verwendet werden können, lassen sich auch für die Herstellung der erfindungsgemäß vorgeschlagenen kationspezifischen Polymermembranschichten einsetzen. Eine Übersicht über entsprechende Schichtkomponenten kann den folgenden Quellen zu entnommen werden: CRC Handbook of ion-selective electrode: selectivity coefficients/ Ed. Umezawa Y., CRC Press: Boca Raton, 1990; in Produktbroschüren, Selectophore (ionophores for ion-selective electrodes and optodes) und Quats, Crowns and Polyesters der Firma Fluka Chemie AG; Vögtle F., Cyclophan-Chemie, Stuttgart: Teubner, 1990, etc.

Als nächstes sollen die Meßbedingungen näher erläutert werden. Für die Analyse mit Hilfe der in dieser Erfindung vorgeschlagenen Kationensensoren kann gegebenenfalls eine Anpassung des pH-Wertes der zu analysierenden, wäßrigen Probe zu einem bestimmten Wert erforderlich sein. Das ist besonders für Wasserproben in Anwendungsbereichen der Industrie und Umwelt zu berücksichtigen.

Diese Anpassung kann beispielsweise durch die Verdünnung der Probe mit einer Pufferlösung mit einem bekanntem pH-Wert erfolgen, welches eine Standardmethode der Probevorbereitung darstellt. Die dafür eingesetzten Pufferzusammensetzungen und einzelnen chemischen Komponenten sind aus Standardnachschlagwerken bekannt. Generell werden für die Vorbereitung von Pufferlösungen wasserlösliche schwache Säuren oder Basen eingesetzt, welche z.B. aus Produktkatalogen von Fa. Merck und Fa. Fluka zu entnehmen sind. Als Beispiele seien folgende Puffer genannt: Tris(hydroxymethyl)aminomethan,,N,-bis-(2-hydroxyethyl) glycine, Acetat/Essigsäure, kombinierte Puffer aus Borat/Citrat/Dihydrogenphosphat, etc.

Vorzugsweise sollte der pH-Wert der wäßrigen Probelösung auf oben beschriebene Weise im Bereich von 3 bis 11, besonders bevorzugt zwischen 6 und 8 liegen.

Für die on-line Analyse kann die erforderliche Probevorbereitung durch eine standardisierte Zugabe der Konditionierungspuffer (Konditionierungslösung) erfolgen.

Erfindungsgemäß können die vorgeschlagenen Ionensensoren als Wegwerfsensoren oder als eine Art von Teststreifen mit elektronischer Datenerfassung eingesetzt werden. In diesem Fall kann der Sensor oberhalb der kationenselektiven Schicht zusätzlich noch eine Schicht besitzen, die aus trockenen und löslichen Puffersubstanzen, welche gegebenenfalls in eine poröse Trägermatrix eingebracht werden können, besteht. Nach dem Kontakt mit beispielsweise einer wäßrigen Lösung löst sich die obere Schicht auf, wodurch die erforderliche Einstellung des pH-Wertes der Probelösung erfolgt.

Bei Bedarf kann auch die Osmolalität (ionische Stärke) der Probe zu einem Standardwert angepaßt werden.

Weitere Einzelheiten, Merkmale und Vorteile der vorliegenden Erfindung ergeben sich aus der nachfolgenden Beschreibung von Ausführungsbeispielen und anhand der Zeichnungen. Es zeigen

Figur 1 den schematischen Aufbau einer ersten Ausführungsform eines kationselektiven Sensors mit einer kationspezifischen Schicht;

Figur 2 den schematischen Aufbau der zweiten Ausführungsform eines kationselektiven Sensors als Teststreifen;

Figur 3 beispielhafte Meßelektroden-Anordnungen, bei denen die Leiter in Form von dicken oder dünnen Schichten gebildet sind; und

Figur 4 schematisch den Aufbau der Meßelektroden in Form von Interdigitalelektroden und eine Meßanordnung für die Messung der Admittanz des Sensors.

Fig. 1 zeigt im Schnitt den schematischen Aufbau eines erfindungsgemäßen kationselektiven Sensors 1. Der Sensor 1 steht in direktem Kontakt mit der Lösung 4 und ist dabei so aufgebaut, daß die analytspezifische Schicht 3 auf einem inerten Träger 7 aufgebracht ist. Die Schichtdicke der sensitiven Schicht 3 kann dabei im Bereich von 0,01 µm bis 1 mm liegen. In der Ausführungsform nach Fig. 1 weisen die Elektroden 5, 6 einen direkten Kontakt mit der Schicht 3 auf. Diese Schicht hat im Beispielfall nach Fig. 1 folgende Zusammensetzung:

- 64 Gew.% Polymermaterial
- 32 Gew.% Weichmacher

- 2 Gew.% kationenselektive Kopplungselementen
- 2 Gew.% Komponenten mit Säure/Base-Eigenschaften.

Fig. 2 zeigt nun analog zum Ausführungsbeispiel nach Fig. 1 den schematischen Aufbau eines erfindungsgemäßen Sensors als Teststreifen 2. In der Ausführungsform nach Fig. 2 ist ein weitere Schicht 8 auf der kationenselektiven Schicht 7 vorgesehen. Die Schicht 8 enthält lösliche Puffersubstanzen und optional weitere Komponenten, welche für die Probevorbereitung erforderlich sind. Nach dem Kontakt mit einer wäßrigen Lösung, löst sich die Schicht 8 auf, wodurch die erforderliche Einstellung des pH-Wertes und gegebenenfalls ionischen Stärke der Probelösung erfolgt. Die Schicht 8 besteht im Beispielfall aus Filterpapier, das die getrockneten Komponenten des Phosphatpuffers oder TRIS-Puffers enthält und weist eine Schichtdicke von 0,01 µm bis 1 mm auf.

In Fig. 3 sind beispielhaft Meßanordnungen bestehend aus kationselektiven Sensor mit zwei Elektroden 5, 6 und einem Meßgerät 9 dargestellt. Hinsichtlich der praktischen Durchführung von Leitfähigkeitsmessungen kann zwischen zwei grundlegenden Typen von Meßzellen unterschieden werden:

1. Beide Leiter 5, 6 werden von der Schicht 3 überdeckt, die auf diese Weise eine kontinuierliche Bulkphase bildet (Fig. 3a);

2. Jeder der Leiter 5, 6 wird durch die Schicht 3 separat übergedeckt, die Schichten bilden keine kontinuierliche Bulkphase (Fig. 3b). Es kann auch nur ein Leiter durch die Schicht 3 abgedeckt sein.

Für den Fall 1 (siehe Fig. 3a) können das Verhältnis zwischen den charakteristischen Abmessungen der Schicht 3 (Dicke - d) und denen der Leiter 5, 6 (geringster Abstand zwischen den Leitern a, größte Breite der Leiter entlang der Verbindungslinie b) betreffend zwei charakteristische Fälle aufgeführt werden:

1.1. entweder a oder b oder beide sind größer als d;

1.2. a und b sind beide kleiner als d.

Die Fälle 1.1 und 2 sind in dem Sinne ähnlich, daß bei solchen Anordnungen die Veränderung der Leitfähigkeit der getesteten Lösung, in welche die Sensorsonde eintaucht, zum gemessenen Sensor-Output-Signal beiträgt. Die Messungen der spezifischen Ionenkonzentration sind jedoch auch in diesem Fall noch möglich, wenn:

- Die Untergrundleitfähigkeit der Probe konstant ist;

- Die Leitfähigkeit der Probe sehr viel größer ist als die Leitfähigkeit der verwendeten kationenselektiven Membranen;

- Die Sensor-Charakteristika in einer Standardlösung bekannter oder eingestellter Leitfähigkeit vor und nach der Messung in einer Lösung bestimmt wurden;

- parallele Messungen der Leitfähigkeit der probe gemacht und im betracht gezogen wurden.

Der Fall 1.2 entspricht der Situation, wenn der Anteil der Volumenleitfähigkeit der Probe am Sensor-Output-Signal minimal ist, so daß das gemessene Signal hauptsächlich der Volumenleitfähigkeit der ionenselektiven Membran entspricht.

Die Elektroden können beispielsweise als Drahtelektroden ausgestaltet sein. Als vorteilhaft erweist sich dabei die äußerst einfache und kostengünstige Herstellung.

Scheibenelektroden haben den Vorteil der einfachen Erneuerung der Sonde durch Polieren der Meßoberfläche der Elektroden.

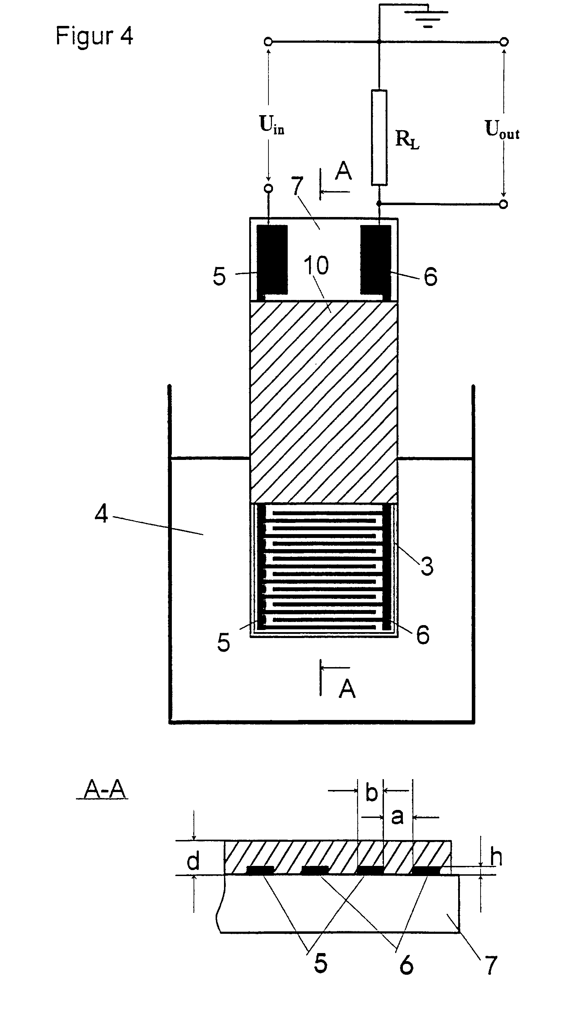

Eine bevorzugte Konstruktionsmöglichkeiten der Sensorelektroden bilden Interdigitalelektroden, wie in Fig. 4 dargestellt.

Zwei Interdigitalelektroden (IDE) oder Leitungsbänder 5, 6 werden auf ein isolierendes Substrat 7 aufgebracht (Fig. 4). Das letztere kann ein Polymerband (zum Beispiel Polyimid), Glas, Keramik (zum Beispiel geschmolzenes Aluminium oder Sital) Saphir oder passiviertes Silizium sein. Die Elektrodenmaterialien können aus ionisch-, elektronisch- oder halbleitenden Materialien bestehen.

Die den messenden Teil mit den Kontaktflächen des Sensorchips verbindenden Bereiche der Elektroden müssen durch eine elektrisch isolierende Schicht 10 abgedeckt sein. Die Passivierungsschicht 10 läßt nur den elektrischen Abgriff und die sensitive Fläche der Elektrode 5, 6 freiläßt. Diese Passivierungsschicht 10 kann z.B. ein Polymerfilm sein (hochtemperaturvernetztes Polyimid oder Photowiderstände) oder ein anorganischer Film aus beispielsweise pyrolytischem Silikonoxid, CVD-Silikonnitrid oder aufgebrachtem Glas.

Der Vorteil bei der Verwendung einer IDE liegt in der Möglichkeit der dichten Anordnung der Elektroden (die Abmessungen a und b können bis in den Submikromaßstab hinein verringert werden) bei gleichzeitig großer Peripherie, was zu einer Erhöhung der Sensitivität der Leitfähigkeitsmessungen auf einer geringen Fläche führt. Die niedrigste erreichbare Grenze für die Abmessungen a und b liegt bei ca. 0.1 μm, 2 μm bzw. 50 μm, wenn Elektronen-Photolithographie, optische Photolithographie bzw. Siebdrucktechnologie zur Elektrodenherstellung angewandt werden. Die Dikke h der Elektroden liegt bevorzugt in einem Bereich von 0.01 μm bis 10 μm.

Die kationenselektive Schicht 3 wird auf der Meßfläche der IDE aufgebracht, welche frei von Passivierung ist. Die Membran muß die gesamte sensitive Fläche der Elektroden 5, 6 abdecken. Da die elektrische Leitfähigkeit der ionenselektiven Membran eher niedrig ist (ihr Widerstand kann eine Höhe von $10^8$ $\Omega$*$cm^2$ erreichen), machen sogar kleine, der Lösung direkt ausgesetzte Teile der Elektrode eine zuverlässige Messung der Membranleitfähigkeit unmöglich, weil ihr Widerstand geringer ist als der Membranwiderstand selbst, und sie somit den Stromfluß im Meßkreis kurzschließen können.

Die Abmessungen von a, b und h sollten möglichst so gewählt werden, daß das Verhältnis 1.2 (s.o.) erfüllt wird, das heißt die Membrandicke d sollte größer sein als a sowie b und h. Die Dicke der den zentralen Teil des Chips bedeckenden Passivierungsschicht sollte vorzugsweise größer sein als die der Meßmembran. Für diesen Fall stören Veränderungen in der Untergrundleitfähigkeit der Probe in geringstem Umfang die Messung der Leitfähigkeit der ionenselektiven Membran.

Die Erfindung umfasst nicht nur Einzel-, sondern auch Multianalytsonden, die durch das Vereinigen bzw. Integrieren von Mehrfachelektroden auf einer Sensoreinheit oder einem Träger hergestellt werden und mit für verschiedene Kationen spezifischen Schichten überzogen sind. Sensoren mit mäßiger Selektivität können ebenfalls in einer Multisensoreinheit integriert werden, was zum Erhalt von sogenannten "Finger-Prints" führt, die den unterschiedlichen Zusammensetzungen der Probenlösung entsprechen. Nachträglich kann unter Anwendung verschiedener Methoden der Mustererkennung den jeweiligen Ansprechmustern eine entsprechende Probenzusammensetzung zugeordnet werden. Die bevorzugte Konstruktion des Multisensors basiert auf der Verwendung von mikroelektronischen Chips mit der erforderlichen Anzahl an Interdigitalelektrodenpaaren, wobei jedes Paar mit der geeigneten Membran überzogen ist. Solch eine Konstruktionsweise hat den Vorteil der technologischen Kompatibilität mit IC-Technologien sowie der Einfachheit der Miniaturisierung.

Mit den Sensoren, die gemäß der Ausführungsbeispiele nach Fig. 1 und nach Fig. 2 hergestellt wurden, sind Leitfähigkeitsmessungen durchgeführt worden.

Für die Messung der Materialleitfähigkeit sind mehrere Techniken verfügbar, grundsätzlich unterteilbar in DC- und AC-Techniken (Cooper, W.D., Helfrick, A.D-E., Elektrische Meßtechnik, VCH: Weinheim, Basel, Cambridge, New York, 1989). Die AC-Techniken werden im allgemeinen bevorzugt, da sie eine Erniedrigung des Verhältnisses von Signal zu Rauschen erlauben und, besonders im vorliegenden Fall der ionischen Leitfähigkeit, eine Konzentrationspolarisation in der Nähe der Elektrodenoberflächen verhindern.

Alternativ können Messungen der Bulkleitfähigkeit von Schichten mittels der bipolaren Pulstechniken, beschrieben bei Johnson, D.E. und Enke C.G., Bipolar pulse technique for fast conductance measurements, Analytical chemistry, 1970, v. 42, p. 329 - 335, durchgeführt werden. Die Vorteile dieser Technik bestehen darin, daß die Messungen schnell durchgeführt werden können (bis zu 10 μs) und unabhängig von parallelen und seriellen Streukapazitäten sind.

Eine der einfachsten für die Messung der Admittanz (Impedanz) des Sensors und damit der Leitfähigkeit der Meßmembran verwendeten elektrischen Anordnungen ist in Fig. 4 dargestellt.

Der Lastwiderstand $R_L$ wird mit dem zu untersuchenden Sensor in Reihe geschaltet und der Spannungsabfall an $R_L$ liefert das Ausgangssignal. Beim Anlegen einer AC-Eingangsspannung ist die bevorzugte Bedingung für den Einsatz einer solchen Anordnung diejenige, daß innerhalb des verwendeten Frequenzbereichs der Eingangsspannung die Impedanz $Z_{Sensor}$ des getesteten Sensors wesentlich größer sein sollte als $R_L$. In diesem Fall ist der Stromfluß Richtung Lastwiderstand hauptsächlich von der Impedanz des Sensors bestimmt und kann leicht nach der Formel

$$I(\omega) = U_{out}(\omega) / R_L \qquad (1)$$

berechnet werden. Hier ist $\omega$ die Winkelfrequenz der Eingangsspannung $U_{in}$ und $U_{out}$ ist die Ausgangsspannung.

Wenn eine AC-Eingangsspannung angelegt wird, ist sowohl die Amplitude als auch die Phase des Ausgangssignals (Spannung oder Strom) frequenzabhängig. Die Dispersion (Frequenzabhängigkeit) des Ausgangssignals ist unter den oben festgelegten Bedingungen hauptsächlich durch die AC-Impedanz des getesteten Sensors bestimmt.

Die Admittanz des Sensors kann berechnet werden mit der Formel

$$Y = \frac{Re(U_{out})}{R_L \cdot |U_{inp}|} + i\,\frac{Im(U_{out})}{R_L \cdot |U_{inp}|} \qquad (2)$$

Der erste Term auf der rechten Seite stellt den Realteil der Sensorsadmittanz

$$Re(Y) = \frac{Re(U_{out})}{R_L \cdot |U_{inp}|} \qquad (3)$$

dar, der proportional zum gemessenen Ausgangssignal ist und mit Hilfe von Gleichung 3 berechnet werden kann, vorausgesetzt daß $R_L$ und die Amplitude der Eingangsspannung $U_{inp}$ bekannt sind.

Bei einigen Meßgeräten wird statt der Admittanz Y die Impedanz Z des Sensors gemessen. Die Impedanz Z eines Systems stellt den Kehrwert zur dazugehörigen Admittanz dar. Impedanzmessungen können daher ebenfalls zur Charakterisierung der Leitfähigkeit einer Meßmembran angewandt werden.

Um die Änderungen der Membranleitfähigkeit verfolgen zu können, werden in der bevorzugten Ausführungsform der Erfindung die Messungen der Admittanz, oder alternativ einer Phasen-Komponenten des Ausgangssignals der Meßanordnung aus Fig. 4 verwendet. Diese Werte hängen ebenfalls von der Frequenz ab, und diese Abhängigkeit kann in den verschiedenen Frequenzbereichen variieren. Die übliche Betriebsfrequenz wird unter Einbeziehung dieser Faktoren mit dem Ziel der Optimierung der Sensorempfindlichkeit, der Verringerung des Aufwands hinsichtlich der die Meßeinrichtungen sowie der Unterdrückung unspezifischer Störungen ausgewählt. Der bevorzugte Arbeitsbereich liegt bei Frequenzen zwischen 100 Hz und 100 kHz.

Ausführungsbeispiel

Zwei identische Paare von interdigitalen Dünnschicht-Metallelektroden aus Ni, Pt oder Au werden durch Vakuumaufdampfung auf ein 0,5 mm dickes Keramiksubstrat hergestellt. Die Abmessungen eines Sensorchips liegen bei 5 mm x 20 mm. Jede Elektrodenfinger ist ca. 10 µm breit und ca. 1 mm lang mit ca. 10 µm Abstand zwischen den Elektrodenfingern eines Paares. Die sensitive Fläche eines jeden impedimetrischen Transducer bildenden Elektrodenpaares beträgt ca. 1 $mm^2$. Um die sensitive Fläche des Sensors abzugrenzen, wird der zentrale Teil des Chips mit einer Schicht Dow Corning Silikongummi verkapselt. Das vollständige Chip-Layout ist in Fig. 4 schematisch dargestellt.

Als Polymermaterial wird hochmolekulares Polyvinylchloridhomopolymerisat verwendet, Weichmacher ist o-Nitrophenyloctylether. Als kaliumselektives Kopplungselement wird eine aus dem Stand der Technik bekannte Komponente verwendet, das natürliche Antibiotikum Valynomycin. Als Komponente mit sauren und basischen Eigenschaften wird ETH 2412, 3-Hydroxy-4-(4-nitrophenolazo)phenyloctadecanoat eingesetzt. Alle Komponenten können von der Firma Fluka (Buchs) bezogen werden.

Die kationenselektive Schicht hat folgende Komposition: 5,5 mg ETH 2412, 15 mg Valinomycin, 160 mg o-Nitrophenyloctylether, 80 mg PVC. Diese Komposition wird in 3 ml Tetrahydrofuran gelöst und durch Eintauchen des Sensors in diese Lösung auf die sensitive Fläche des Transducers aufgebracht.

Die Probelösung wird mit einem Universalpuffer (10 mM $NaH_2PO_4$, 6,6 mM Zitronensäure, 21,5 mM $Na_2B_4O_7$) versetzt und mit verdünnter $H_2SO_4$ auf einen pH-Wert von 5 eingestellt.

**Patentansprüche**

1. Kationselektiver Sensor zur qualitativen und/oder quantitativen Bestimmung von Kationen in Lösungen, welcher Sensor mindestens eine, mit der Lösung (4) in Kontakt stehende, ionisch leitende, kationspezifische Schicht (3) aus einem flüssigen, festen oder halbfesten Material enthält,
   diese Schicht (3) Kopplungselemente enthält, welche die Kationen selektiv aus der Lösung entfernen, so daß sich durch Kationenaufnahme die elektrischen Eigenschaften wie Widerstand, Leitfähigkeit, Admittanz oder Impedanz der Schicht (3) ändern,
   die kationselektive Schicht (3) mindestens eine Säure/Base-Komponente enthält,
   und der Sensor mindestens zwei Elektroden (5, 6), von denen mindestens eine mit der kationspezifischen Schicht (3) in Verbindung steht, umfaßt.

2. Kationselektiver Sensor nach Anspruch 1, **dadurch gekennzeichnet,**
   **daß** die Säure/Base-Komponente in Form von funktionellen Gruppierungen mit Säure/Base-Eigenschaften in der kationselektiven Schicht (3) vorhanden ist.

3. Kationselektiver Sensor nach einem der vorhergehenden Ansprüche, **dadurch gekennzeichnet,**
**daß** die Säure/Base-Komponente in Form von mindestens einer chemischen Verbindung mit Säure/Base-Eigenschaften in der kationselektiven Schicht (3) vorhanden ist.

4. Kationselektiver Sensor nach einem der vorhergehenden Ansprüche, **dadurch gekennzeichnet,**
**daß** die Säure/Base-Komponente an eine weitere Komponente der kationselektiven Schicht (3) gebunden ist.

5. Kationselektiver Sensor nach einem der vorhergehenden Ansprüche, **dadurch gekennzeichnet,**
**daß** die Säure/Base-Komponente lipophil ist.

6. Kationselektiver Sensor nach einem der vorhergehenden Ansprüche, **dadurch gekennzeichnet,**
**daß** die Säure/Base-Komponente eine lipophilen Säure oder lipophile Base ist.

7. Kationselektiver Sensor nach einem der vorhergehenden Ansprüche, **dadurch gekennzeichnet,**
**daß** die Säure/Base-Komponente eine Säurekonstante $pK_s$ im Bereich von 3 bis 12 besitzt.

8. Kationselektiver Sensor nach einem der vorhergehenden Ansprüche, **dadurch gekennzeichnet,**
**daß** die Säure/Base-Komponente eine Säurekonstante $pK_s$ im Bereich von 6 bis 8 besitzt.

9. Kationselektiver Sensor nach einem der vorhergehenden Ansprüche, **dadurch gekennzeichnet,**
**daß** die Säure/Base-Komponente ein pH-Indikator oder ein Derivat eines pH-Indikators ist.

10. Kationselektiver Sensor nach Anspruch 9, **dadurch gekennzeichnet,**
**daß** der pH-Indikator oder das Derivat lipohil ist.

11. Kationselsktiver Sensor nach einem der Ansprüche 9 oder 10, **dadurch gekennzeichnet,**
**daß** der pH-Indikator oder das Derivat durch Ankopplung von Benzyl-Resten oder Alkan-Ketten lipophil modifiziert ist.

12. Kationselektiver Sensor nach Anspruch 9, **dadurch gekennzeichnet,**
**daß** die Säure/Base-Komponente eine phenolische Verbindung wie p-Nitrophenol, eine Verbindung oder ein Derivat des Fluorescein, des Fluorescinester, des 7-Hydroxy-Cumarin, der Resorufine, der Flavone, des Pyren-3-ol oder eine Komponente wie 7-(n-decyl)-2-methyl-4-(3',5'-dichlorophen-4'-on)indonaphtol ist.

13. Kationselektiver Sensor nach einem der Ansprüche 1 bis 8, **dadurch gekennzeichnet,**
**daß** die Säure/Base-Komponente eine Fettsäure, ein Lipid, ein Tensid oder ein Derivat dieser Substanzen ist.

14. Kationselektiver Sensor nach einem der Ansprüche 1 bis 8, **dadurch gekennzeichnet,**
**daß** die Säure/Base-Komponente 3-Hydroxy-4-(4-nitrophenolazo)phenyloctadecanoat ist.

15. Kationselektiver Sensor nach einem der vorhergehenden Ansprüche, **dadurch gekennzeichnet,**
**daß** die kationselektive Schicht (3) mindestens eine der Komponenten organische Flüssigkeit, Weichmacher, Ionenaustauscher, Polymer, Trägermaterial oder eine beliebige Kombination dieser Komponenten enthält.

16. Kationselektiver Sensor nach einem der vorhergehenden Ansprüche, **dadurch gekennzeichnet,**
**daß** die kationselektive Schicht (3) lipophil ist.

17. Kationselektiver Sensor nach einem der vorhergehenden Ansprüche, **dadurch gekennzeichnet,**
**daß** die kationselektive Schicht (3) eine Dicke zwischen 0,01 µm und 1 mm aufweist.

18. Kationselektiver Sensor nach einem der vorhergehenden Ansprüche, **dadurch gekennzeichnet,**
**daß** die kationselektive Schicht (3) 20-80 Gew% Polymermaterial, 20-80 Gew% Weichmacher, 1-10 Gew% kationselektive Kopplungselemente und 1-10 Gew% Säure/Base-Komponenten enthält.

19. Kationselektiver Sensor nach Anspruch 18, **dadurch gekennzeichnet,**
**daß** die kationselektive Schicht (3) 1-10 Gew% Ionentauscher enthält.

20. Kationselektiver Sensor nach einem der vorhergehenden Ansprüche, **dadurch gekennzeichnet,**

**daß** die kationselektive Schicht (3) auf einen inerten Träger (7) aufgebracht ist.

21. Kationselektiver Sensor nach einem der vorhergehenden Ansprüche, **dadurch gekennzeichnet,** **daß** auf die kationselektiven Schicht (3) eine weitere Schicht (8) aufgebracht ist.

22. Kationselektiver Sensor Anspruch 21, **dadurch gekennzeichnet,** **daß** die Schicht (8) mindestens eine lösliche Puffersubstanz enthält.

23. Kationselektiver Sensor nach einem der Ansprüche 21 bis 22, **dadurch gekennzeichnet,** **daß** die Schicht (8) mindestens eine der Probenvorbereitung dienende Komponente enthält.

24. Kationselektiver Sensor nach einem der Ansprüche 21 bis 23, **dadurch gekennzeichnet,** **daß** die Schicht (8) einen die kationselektive Schicht (3) stabilisierenden, porösen Träger oder Matrix enthält.

25. Kationselektiver Sensor nach einem der Ansprüche 21 bis 24, **dadurch gekennzeichnet,** **daß** einzelne Komponenten der Schicht (8) in der Lösung (4) löslich sind und den pH-Wert und/oder die ionische Stärke der Lösung (4) einstellen.

26. Kationselektiver Sensor nach einem der Ansprüche 21 bis 25, **dadurch gekennzeichnet,** **daß** die Schicht (8) eine Dicke zwischen 0,01 μm und 1 mm aufweist.

27. Kationselektiver Sensor nach einem der vorherigen Ansprüche, **dadurch gekennzeichnet,** **daß** der Sensor als Teststreifen (2) ausgeführt ist.

## Claims

1. Cation-selective sensor for the qualitative and/or quantitative determination of cations in solutions,
which sensor contains at least one
ionically conducting cation-specific layer (3) which is in contact with the solution (4) and is made of a liquid, solid or semi-solid material,
wherein this layer (3) contains coupling elements which selectively remove the cations from the solution, so that the electrical properties such as resistance, conductance, admittance or impedance of the layer (3) are changed by cation uptake,
wherein the cation-selective layer (3) contains at least one acid/base component,
and wherein the sensor comprises at least two electrodes (5, 6), at least one of which is connected to the cation-specific layer (3).

2. Cation-selective sensor according to Claim 1, **characterized in that** the acid/base component is present in the cation-selective layer (3) in the form of functional groups with acid/base properties.

3. Cation-selective sensor according to one of the preceding claims, **characterized in that** the acid/base component is present in the cation-selective layer (3) in the form of at least one chemical compound with acid/base properties.

4. Cation-selective sensor according to one of the preceding claims, **characterized in that** the acid/base component is bound to a further component of the cation-selective layer (3).

5. Cation-selective sensor according to one of the preceding claims, **characterized in that** the acid/base component is lipophilic.

6. Cation-selective sensor according to one of the preceding claims, **characterized in that** the acid/base component is a lipophilic acid or lipophilic base.

7. Cation-selective sensor according to one of the preceding claims, **characterized in that** the acid/base component has an acid dissociation constant $pK_s$ in the range from 3 to 12.

8. Cation-selective sensor according to one of the preceding claims, **characterized in that** the acid/base component has an acid dissociation constant $pK_s$ in the range from 6 to 8.

**9.** Cation-selective sensor according to one of the preceding claims, **characterized in that** the acid/base component is a pH indicator or a derivative of a pH indicator.

**10.** Cation-selective sensor according to Claim 9, **characterized in that** the pH indicator or the derivative is lipophilic.

**11.** Cation-selective sensor according to one of Claims 9 and 10, **characterized in that** the pH indicator or the derivative is lipophilically modified by the coupling of benzyl radicals or alkane chains.

**12.** Cation-selective sensor according to Claim 9, **characterized in that** the acid/base component is a phenolic compound such as p-nitrophenol, a compound or a derivative of fluorescein, of a fluorescein ester, of 7-hydroxycoumarin, of resorufin, of flavone or of pyren-3-ol, or a component such as 7-(n-decyl)-2-methyl-4-(3',5'-dichlorophen-4'-one)indonaphthol.

**13.** Cation-selective sensor according to one of Claims 1 to 8, **characterized in that** the acid/base component is a fatty acid, a lipid, a surfactant or a derivative of these substances.

**14.** Cation-selective sensor according to one of Claims 1 to 8, **characterized in that** the acid/base component is 3-hydroxy-4-(4-nitrophenolazo)phenylocta-decanoate.

**15.** Cation-selective sensor according to one of the preceding claims, **characterized in that** the cation-selective layer (3) contains at least one of the components: organic liquid, plasticizer, ion exchanger, polymer, support material or an arbitrary combination of these components.

**16.** Cation-selective sensor according to one of the preceding claims, **characterized in that** the cation-selective layer (3) is lipophilic.

**17.** Cation-selective sensor according to one of the preceding claims, **characterized in that** the cation-selective layer (3) has a thickness of between 0.01 µm and 1 mm.

**18.** Cation-selective sensor according to.one of the preceding claims, **characterized in that** the cation-selective layer (3) contains 20-80% by weight of polymer material, 20-80% by weight of plasticizer, 1-10% by weight of cation-selective coupling elements and 1-10% by weight of acid/base components.

**19.** Cation-selective sensor according to Claim 18, **characterized in that** the cation-selective layer (3) contains 1-10% by weight of ion exchanger.

**20.** Cation-selective sensor according to one of the preceding claims, **characterized in that** the cation-selective layer (3) is applied to an inert support (7).

**21.** Cation-selective sensor according to one of the preceding claims, **characterized in that** a further layer (8) is applied to the cation-selective layer (3).

**22.** Cation-selective sensor according to Claim 21, **characterized in that** the layer (8) contains at least one soluble buffer substance.

**23.** Cation-selective sensor according to one of Claims 21 and 22, **characterized in that** the layer (8) contains at least one component used for sample preparation.

**24.** Cation-selective sensor according to one of Claims 21 to 23, **characterized in that** the layer (8) contains a porous support or matrix stabilizing the cation-selective layer (3).

**25.** Cation-selective sensor according to one of Claims 21 to 24, **characterized in that** individual components of the layer (8) are soluble in the solution (4) and adjust the pH and/or ionic strength of the solution (4).

**26.** Cation-selective sensor according to one of Claims 21 to 25, **characterized in that** the layer (8) has a thickness of between 0.01 µm and 1 mm.

**27.** Cation-selective sensor according to one of the preceding claims, **characterized in that** the sensor is designed

as a test strip (2).

**Revendications**

1. Capteur sélectif pour les cations pour la détermination qualitative et/ou quantitative de cations dans des solutions, lequel capteur contient au moins une couche (3) spécifique pour les cations, conductrice pour les ions, placée en contact avec la solution (4) et formée par un matériau liquide, solide ou semi-solide,
cette couche (3) contenant des éléments de couplage qui éliminent sélectivement les cations à partir de la solution de telle sorte que sous l'effet de l'absorption de cations, les caractéristiques électriques telles qu'une résistance, une conductivité, une admittance ou une impédance de la couche (3) varient,
la couche (3) sélective pour les cations contenant au moins un constituant acide/base, et
le capteur comportant au moins deux électrodes (5, 6), dont l'une au moins est reliée à la couche (3) spécifique pour les cations.

2. Capteur sélectif pour les cations selon la revendication 1, **caractérisé en ce que** le constituant acide/base est présent sous la forme de groupements fonctionnel ayant des caractéristiques d'acide/de base dans la couche (3) sélective pour les cations.

3. Capteur sélectif pour les cations selon l'une des revendications précédentes, **caractérisé en ce que** le constituant acide/base est présent sous la forme d'au moins un composé chimique ayant des caractéristiques d'acide/de base dans la couche (3) sélective pour les cations.

4. Capteur sélectif pour les cations selon l'une des revendications précédentes, **caractérisé en ce que** le constituant acide/base est lié à un autre constituant de la couche (3) sélective pour les cations.

5. Capteur sélectif pour les cations selon l'une des revendications précédentes, **caractérisé en ce que** le constituant acide/base est lipophile.

6. Capteur sélectif pour les cations selon l'une des revendications précédentes, **caractérisé en ce que** le constituant acide/base est un acide lipophile ou une base lipophile.

7. Capteur sélectif pour les cations selon l'une des revendications précédentes, **caractérisé en ce que** le constituant acide/base possède une constante d'acidité $pK_s$ dans la gamme de 3 à 12.

8. Capteur sélectif pour les cations selon l'une des revendications précédentes, **caractérisé en ce que** le constituant acide/base possède une constante d'acidité $pK_s$ dans la gamme de 6 à 8.

9. Capteur sélectif pour les cations selon l'une des revendications précédentes, **caractérisé en ce que** le constituant acide/base est un indicateur du pH ou est un dérivé d'un indicateur du pH.

10. Capteur sélectif pour les cations selon la revendication 9, **caractérisé en ce que** l'indicateur du pH ou le dérivé est lipophile.

11. Capteur sélectif pour les cations selon l'une des revendications 9 ou 10, **caractérisé en ce que** l'indicateur du pH ou le dérivé est modifié d'une manière lipophile par le couplage de restes de benzyle ou de chaînes alcanes.

12. Capteur sélectif pour les cations selon la revendication 9, **caractérisé en ce que** le constituant acide/base est un composé phénolique tel que du p-nitrophénol, un composé ou un dérivé de la fluorescéine, de l'ester de fluorescéine, de la 7-hydroxy-coumarine, de la résorufine, de la flavone, du pyrène-3-ol ou un constituant tel que le 7-(n-décyl)-2-méthyle-4-(3',5'-dichlorophène-4'-on)-indonaphtol.

13. Capteur sélectif pour les cations selon l'une des revendications 1 à 8, **caractérisé en ce que** le constituant acide-base est un acide gras, un lipide, un agent de surface ou un dérivé de ces substances.

14. Capteur sélectif pour les cations selon l'une des revendications 1 à 8, **caractérisé en ce que** le constituant acide/base est du 3-hydroxy-4-(4-nitrophénolazo)phényloctadécanoate.

15. Capteur sélectif pour les cations selon l'une des revendications précédentes, **caractérisé en ce que** la couche (3) sélective pour les cations contient au moins l'un des constituants: un liquide organique, un plastifiant, un échangeur d'ions, un polymère, un matériau porteur ou une combinaison quelconque de ces constituants.

16. Capteur sélectif pour les cations selon l'une des revendications précédentes, **caractérisé en ce que** la couche (3) sélective pour les cations est lipophile.

17. Capteur sélectif pour les cations selon l'une des revendications précédentes, **caractérisé en ce que** la couche (3) sélective pour les cations possède une épaisseur comprise entre 0,01 μm et 1 mm.

18. Capteur sélectif pour les cations selon l'une des revendications précédentes, **caractérisé en ce que** la couche (3) sélective pour les cations contient un matériau polymère pour 20 à 80 % en poids, un plastifiant pour 20 à 80 % en poids, des éléments de couplage sélectifs pour les cations pour 1 à 10 % en poids et des constituants acide/base pour 1 à 10 % en poids.

19. Capteur sélectif pour les cations selon la revendication 18, **caractérisé en ce que** la couche (3) sélective pour les cations contient un échangeur d'ions pour 1 à 10 % en poids.

20. Capteur sélectif pour les cations selon l'une des revendications précédentes, **caractérisé en ce que** la couche (3) sélective pour les cations est déposée sur un support inerte (7).

21. Capteur sélectif pour les cations selon l'une des revendications précédentes, **caractérisé en ce qu'**une autre couche (8) est déposée sur la couche (3) sélective pour les cations.

22. Capteur sélectif pour les cations selon la revendication 21, **caractérisé en ce que** la couche (8) contient au moins une substance tampon soluble.

23. Capteur sélectif pour les cations selon l'une des revendications 21 à 22, **caractérisé en ce que** la couche (8) contient au moins un constituant utilisé pour la préparation d'échantillons.

24. Capteur sélectif pour les cations selon l'une des revendications 21 à 23, **caractérisé en ce que** la couche (8) contient un support ou une matrice poreuse, qui stabilise la couche (3) sélective pour les cations.

25. Capteur sélectif pour les cations selon l'une des revendications 21 à 24, **caractérisé en ce que** les différents constituants de la couche (8) sont solubles dans la solution (4) et règlent la valeur du pH et/ou la force ionique de la solution (4).

26. Capteur sélectif pour les cations selon les revendication 21 à 25, **caractérisé en ce que** la couche (8) possède une épaisseur comprise entre 0,01 μm et 1 μm.

27. Capteur sélectif pour les cations selon l'une des revendications précédentes, **caractérisé en ce que** le capteur est agencé sous la forme de bandes de test (2).

Figur 1

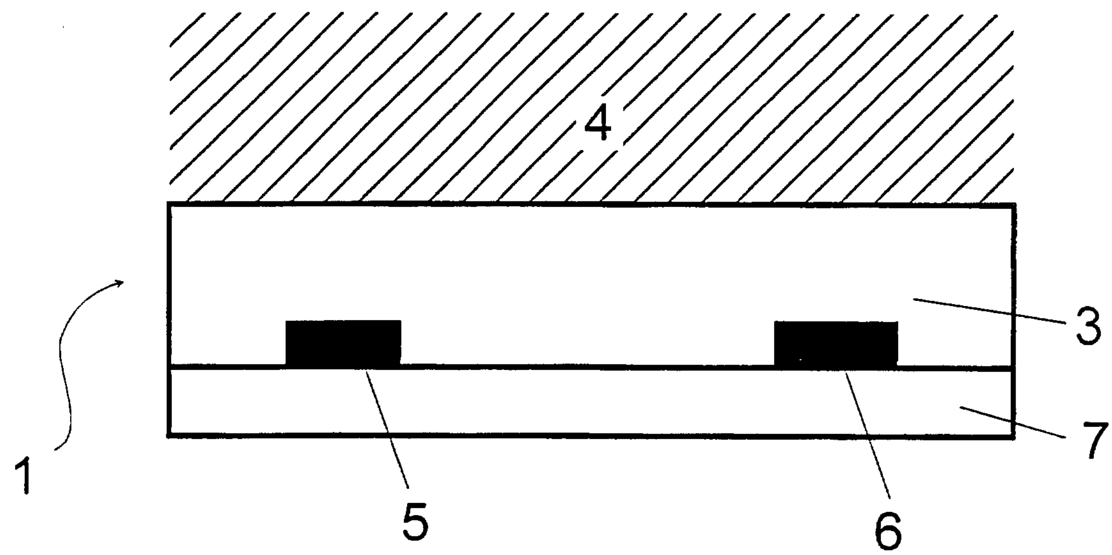

Figur 2

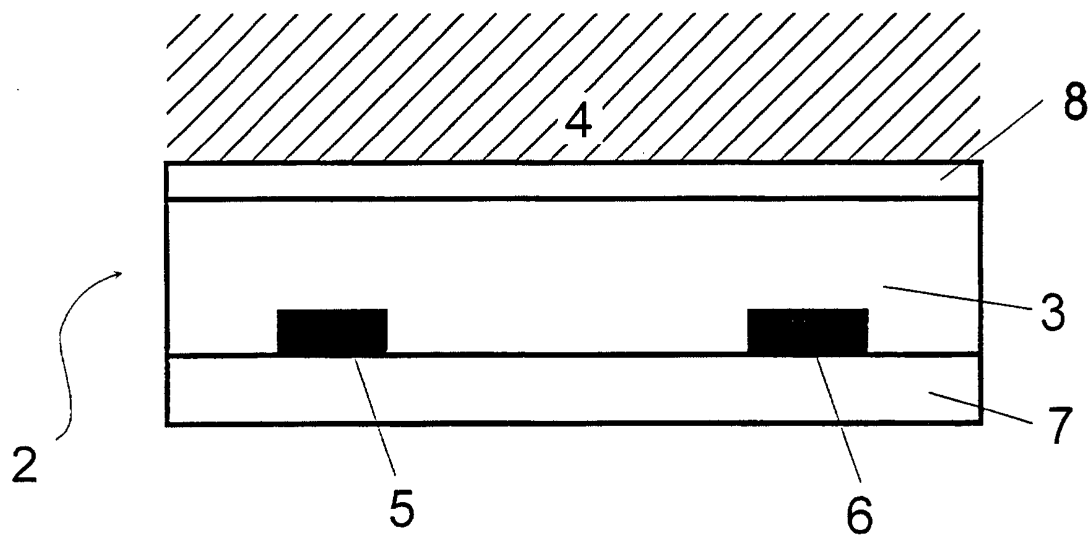

Figur 3

a)

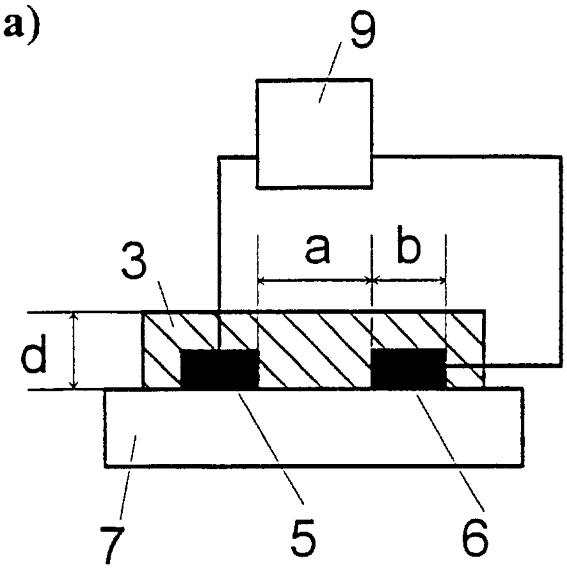


b)

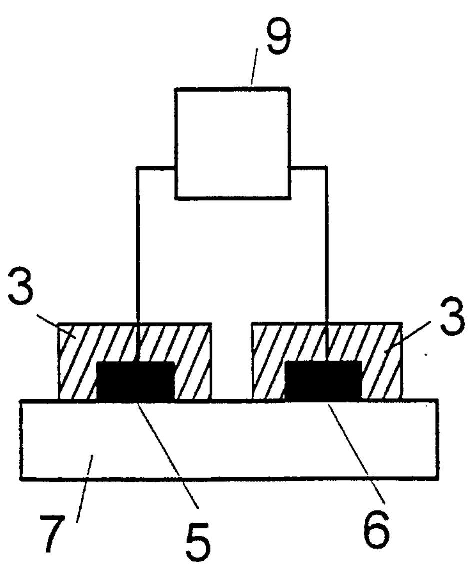

Figur 4

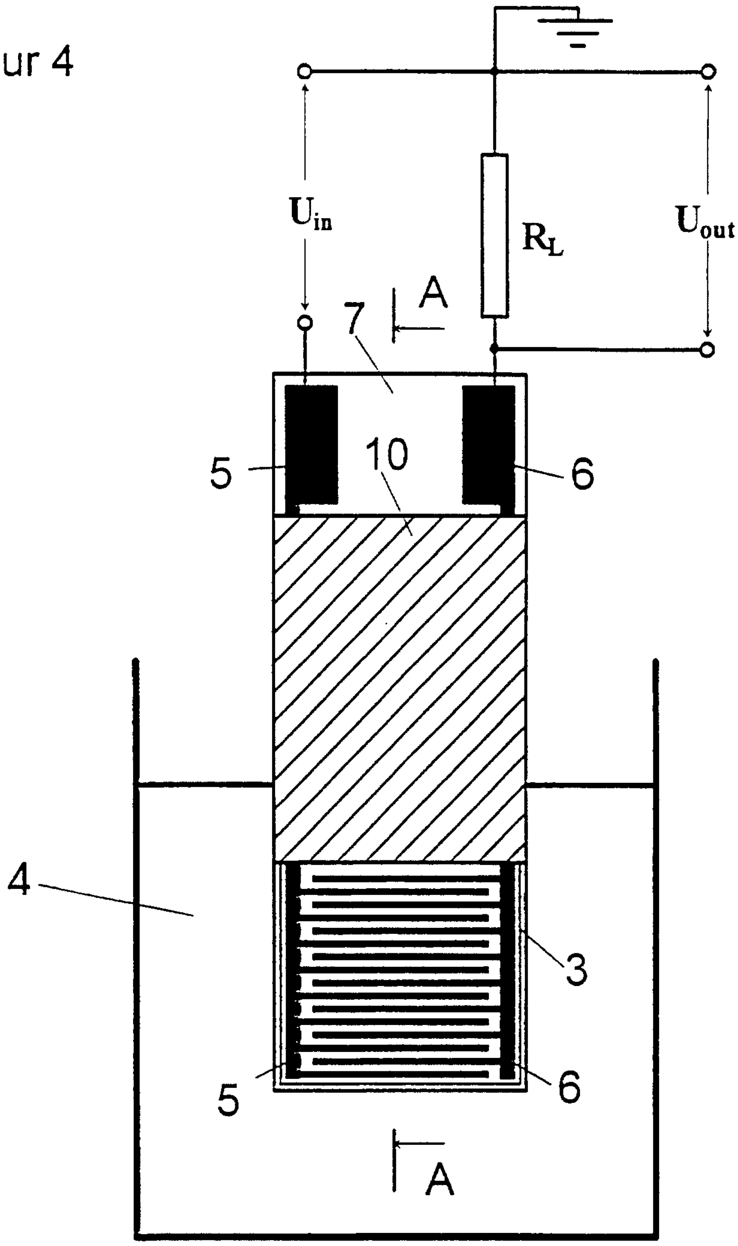


A-A